# EUROPÄISCHE PATENTSCHRIFT

(11) **EP 1 226 919 B1**
(45) Veröffentlichungstag und Bekanntmachung des Hinweises auf die Patenterteilung: **09.03.2005**
(21) Anmeldenummer: 02001532.7
(22) Anmeldetag: 23.01.2002
(51) Int. Cl.: B29C 45/52

(54) **Verfahren zur Herstellung eines Führungselements einer Rückstromsperre sowie entsprechendes Führungselement**
Method for producing a guide member of a non-return valve as well as the resulting guide member
Procédé pour la fabrication d'une membre de guidage d'un clapet antiretour ainsi que le membre de guidage obtenu

(30) Priorität: 30.01.2001 DE 10103863
(43) Veröffentlichungstag der Anmeldung: 31.07.2002
(73) Patentinhaber: Hehl, Karl, 72290 Lossburg (DE)
(72) Erfinder: Hehl, Karl, 72290 Lossburg (DE)
(74) Vertreter: Reinhardt, Harry

(56) Entgegenhaltungen:
- DE-A- 19 849 472
- DE-U- 7 919 878
- PATENT ABSTRACTS OF JAPAN vol. 015, no. 222 (M-1121), 6. Juni 1991 (1991-06-06) -& JP 03 065321 A (HITACHI METALS LTD), 20. März 1991 (1991-03-20)
- PATENT ABSTRACTS OF JAPAN vol. 011, no. 352 (M-643), 18. November 1987 (1987-11-18) -& JP 62 130818 A (MEIKI CO LTD), 13. Juni 1987 (1987-06-13)

## Beschreibung

Die Erfindung betrifft ein Verfahren zur Herstellung eines Führungselements einer Rückstromsperre für eine Spritzgießmaschine zur Verarbeitung von Kunststoffen und anderem plastifizierbaren Massen nach dem Oberbegriff des Anspruches 1 sowie ein entsprechendes Führungselement nach dem Oberbegriff des Anspruches 7.

Beim Spritzgießen von Kunststoffen und anderen plastifizierbaren Materialien werden insbesondere bei Kunststoff-Spritzgießmaschinen Förderschnecken eingesetzt, die in Plastifzierzylindern axial verschiebbar und zum Plastifizieren und zum Fördern des plastifizierten Materials drehbar sind. Zum Einspritzen des in Folge der Reibung und zusätzlicher Heizelemente plastifizierten Materials in einen Formhohlraum wird vor die Förderschnecke ein Dosiervolumen dosiert, das anschließend mit der Förderschnecke als Kolben in den Formhohlraum eingespritzt wird. Hierzu wird die Förderschnecke im Plastifizierzylinder axial bewegt. Um zu vermeiden, dass bei diesem Einspritzvorgang plastifiziertes Material zurückfließt, werden stirnseitig an der Förderschnecke Rückstromsperren eingesetzt. Diese Rückstromsperren besitzen eine Sperrhülse, die an einem Grundkörper der Rückstromsperre axial beweglich gehalten ist. So lange Material vor die Förderschnecke dosiert wird, gibt die Sperrhülse den Durchgang für das plastifizierte Material frei. Beim Einspritzen hingegen wird die Sperrhülse gegen einen Sitzring der Förderschnecke gepresst und dichtet dabei den Raum vor der Förderschnecke gegenüber dem Raum hinter der Rückstromsperre ab.

Beim Dosieren, das heißt bei rücklaufender rotierender Förderschnecke, wird die Sperrhülse vom Sitzring abgehoben und gegen die Anlageflächen von am Kopf des Grundkörpers angeordneten Flügeln gedrückt. Die Sperrhülse dreht sich mit - infolge der Reibung an der Wand des Plastifizierzylinders - gegenüber der Förderschnecke reduzierter Geschwindigkeit während der Drehung der Förderschnecke mit, wobei es zu einem Trockenlauf zwischen den Anlageflächen der Flügel und der Sperrhülse und somit zu erhöhtem Verschleiß kommen kann.

Um diesem Verschleiß entgegen zu wirken, wurde unter anderem in der DE 198 49 472 A1 vorgeschlagen, an den der Sperrhülse zugewandten Flächen der Flügel Auflagelelemente anzuordnen, wobei zumindest die Auflageflächen dieser Auflageelemente aus einem verschleißarmen Werkstoff aufgebaut sind. Ergänzend kann auch die Anlagefläche der Sperrhülse ebenfalls aus verschleißarmem Werkstoff aufgebaut sein. Durch diese Maßnahmen soll der hohe Verschleiß der Rückstromsperre verringert werden und/oder örtliche Schädigungen der Spritzgießmasse an der Berührungsfläche zwischen Sperrhülse, Flügel und Plastifizierzylinder sollen vermieden werden. Allerdings entsteht die aktive Verschleißfläche bereits bei Einfügen der verschleißarmen Elemente in die Flügel des Grundkörpers. Insofern muss das Zusammenfügen mit entsprechendem Aufwand betrieben werden, insbesondere ist es erforderlich, während des Verbindungsprozesses die verschleißarmen Elemente sorgfältig zu zentrieren, um eine aufwändige Nachbearbeitung zu vermeiden.

Aus der JP-A 3065321 ist es bekannt, bei einer Rückstromsperre an den der Sperrhülse zugewandten Flächen der Flügel bei der Herstellung Ausnehmungen vorzusehen, in die anschließend L-förmige Elemente aus verschleißarmen Material eingelötet werden.

Zur Verringerung des Verschleiß der Rückstromsperre wurde in der EP 276 758 A2 vorgeschlagen die Sperrhülse auf beiden Seiten mit je einem Keramikeinsatz zu versehen, der den Anlagebereich von Schneckenspitze und Distanzring schützt. Auch hier entsteht die Verschleißfläche bereits beim Einfügen des Keramikeinsatzes.

Ausgehend von diesem Stand der Technik liegt der vorliegenden Erfindung die Aufgabe zu Grunde, ein günstiges und zuverlässiges Verfahren zur Herstellung eines Führungselements zur Verfügung zu stellen und ein entsprechendes Führungselement zu schaffen, das mit geringerem Aufwand herstellbar ist.

Diese Aufgabe wird durch ein Verfahren mit den Merkmalen des Anspruches 1 sowie durch ein Führungselement mit den Merkmalen des Anspruches 7 gelöst.

Wie im Stand der Technik werden verschleißarme Elemente in Bohrungen des Grundkörpers eingefügt, allerdings erfolgt die eigentliche Entstehung der Verschleißfläche erst durch nachträgliche Bearbeitung des Grundkörpers bzw. der Flügel des Grundkörpers, also nach dem Einbringen der verschleißarmen Elemente. Die aktive Verschleißfläche entsteht damit nicht schon durch das reine Zusammenbringen der Bauteile - es gibt also keine sofortige Verschleißfläche -, sondern erst in einem nachfolgenden Arbeitsgang, so dass die Nachbearbeitung zur Erzeugung der eigentlichen Verschleißfläche erst erfolgt, wenn beide Materialien zusammengefügt worden sind. Dies hat zwar den Nachteil, dass bei der Nacharbeit darauf geachtet werden muss, dass verschiedene Werkstoffe gleichzeitig zu bearbeiten sind, andererseits lässt sich eine sorgfältigere Verbindung zwischen verschleißarmem Element und Grundkörper erzeugen, und es ist ein geringerer Aufwand zum Zentrieren der verschleißarmen Elemente erforderlich, da die endgültige Kontur des Führungselements erst nachträglich geschaffen wird.

Vorzugsweise werden nach Anspruch 3 bzw. bei dem Führungselement nach Anspruch 7 die verschleißarmen Elemente radial eingebaut und anschließend gemäß Anspruch 5 erst aus ihren Bohrungen zumindest teilweise wieder freigesetzt. Dadurch ergibt sich eine vereinfachte Bearbeitung zunächst bei der Herstellung der Bohrungen, zudem können erheblich größere Anlageflächen aufgebaut werden, so dass der Verschleiß insgesamt reduziert wird.

Weitere Vorteile ergeben sich aus den Unteransprüchen.

Im Folgenden wird die Erfindung an Hand der beigefügten Figuren näher erläutert. Es zeigen:
- Fig. 1: einen Schnitt durch einen Plastifizierzylinder im Bereich des Führungselements einer Rückstromsperre,
- Fig. 2, 3: eine Seitenansicht des Führungselements beim Einbringen der Bohrungen sowie nach Herausarbeiten der Kontur der Flügel,

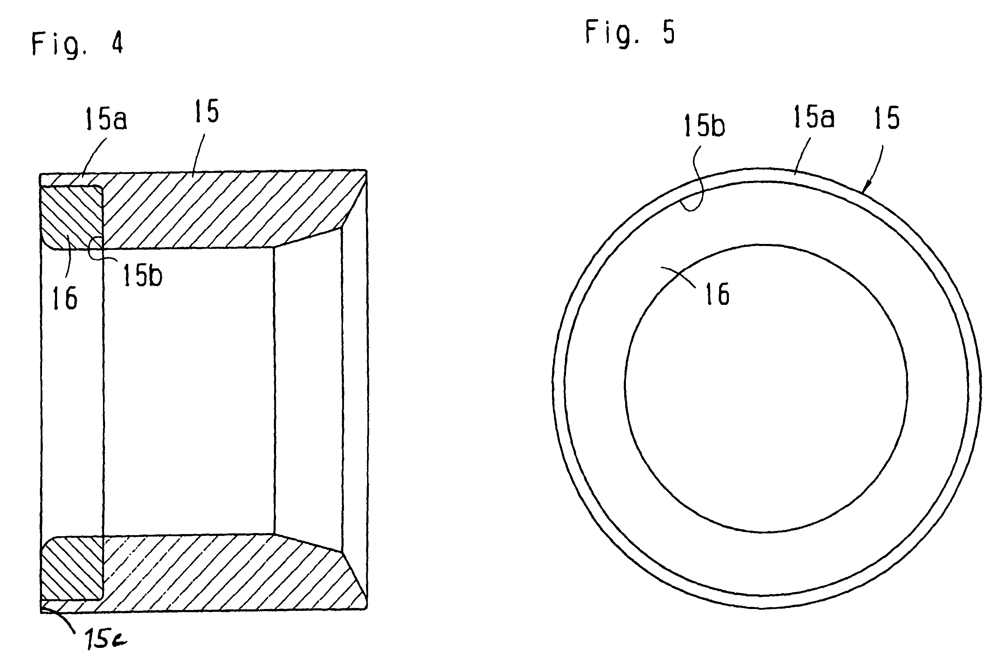

- Fig. 4: einen Längsschnitt durch die Sperrhülse,
- Fig. 5: eine Ansicht der Sperrhülse gemäß Fig. 4 von links.

### Beschreibung bevorzugter Ausführungsbeispiele

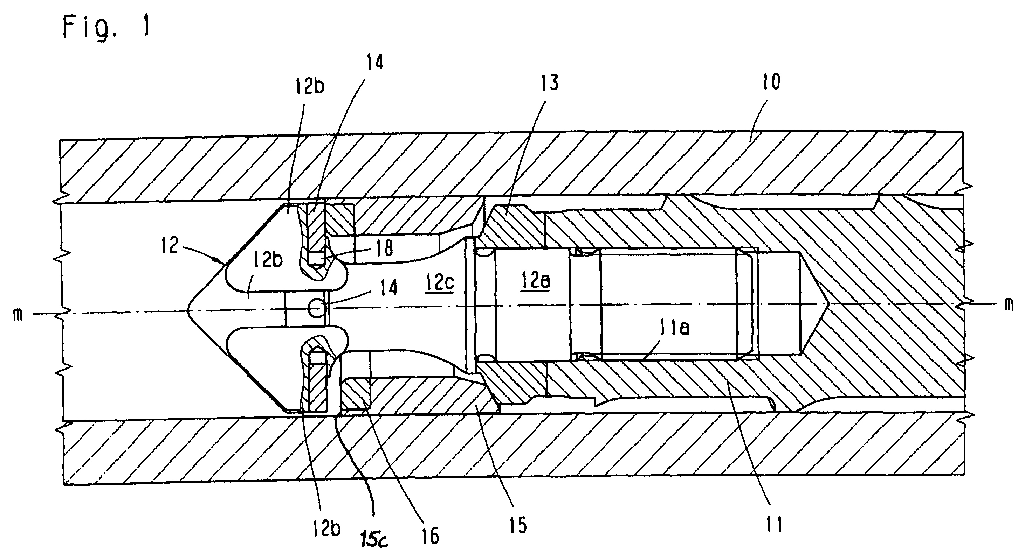

Fig. 1 zeigt den Teil eines Plastifizierzylinders 10 einer Spritzgießmaschine zur Verarbeitung von Kunststoffen und anderer plastifizierbarer Materialien wie zum Beispiel keramische oder pulvrige Massen. In diesem Plastifizierzylinder wird zugeführtes Material durch Reibung und zusätzliche, zeichnerisch nicht dargestellte Heizelemente plastifiziert. Durch die Förderschnecke 11 im Plastifizierzylinder 10 wird das plastifizierte Material vor die Förderschnecke, in Fig.1 links vom Führungselement 12 gefördert. Am Kopf der Förderschnecke 11 ist ein Führungselement 12 als Teil einer Rückstromsperre angebracht, zu der ferner die Sperrhülse 15 gehört. Das Führungselement 12 weist einen Grundkörper 12c auf, der mittig einen verjüngten Bereich besitzt, über dem die Sperrhülse 15 axial beweglich angeordnet ist.

Das Führungselement ist in einer Bohrung 11a der Schnecke mit einem Anschluß 12a befestigt. Im Übergangsbereich zwischen Führungselement 12 und Förderschnecke 11 ist ein Sitzring 13 angeordnet, der im geschlossenen Zustand der Rückstromsperre der Sperrhülse 15 als Anschlag dient, wie dies in Fig. 1 in der unteren Hälfte dargestellt ist. In der oberen Hälfte hingegen ist die Rückstromsperre offen, wobei die Sperrhülse 15 an den Flügeln 12b des Führungselements 12 zur Anlage kommt, so dass Material zwischen den Flügeln in den Raum vor die Förderschnecke dosiert werden kann. Das Führungselement weist wenigstens zwei Flügel 12b, im Ausführungsbeispiel 4 Flügel auf, von denen in Fig.1 drei zu erkennen sind.

Im Übergangsbereich zwischen Sperrhülse 15 und den Flügeln 12b des Grundkörpers 12c sind verschleißarme Elemente 14 angeordnet, die dort eine Anlagefläche 14a für die Sperrhülse 15 bilden. Diese verschleißarmen Elemente 14 werden in Bohrungen 17 der Flügel 12b so eingebracht, dass die verschleißarmen Elemente 14 im Gebrauchszustand des Führungselements 12 mit dieser Anlagefläche 14a der Sperrhülse 15 zugewandt sind. Dies erfolgt dadurch, dass die verschleißarmen Elemente in die Bohrungen 17 eingefügt und dort befestigt werden.

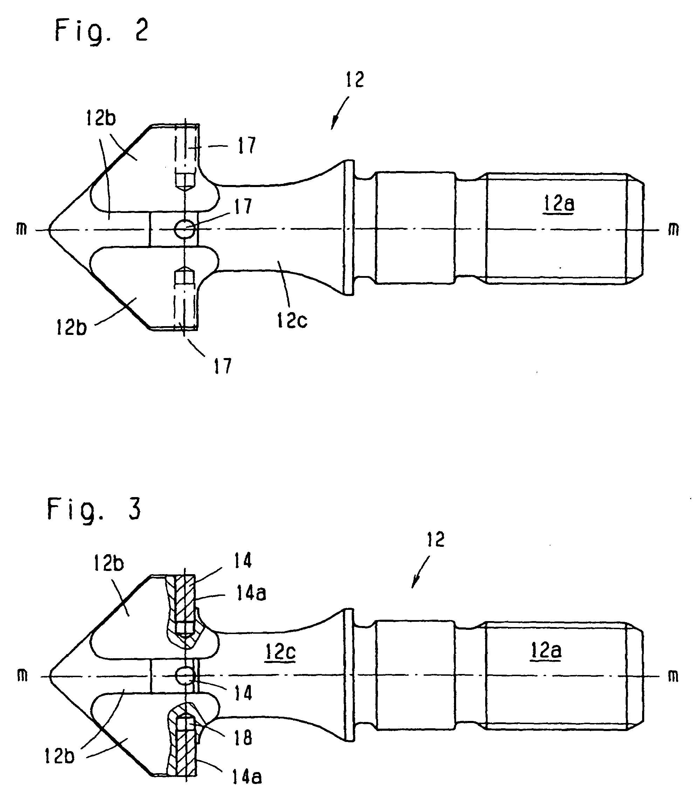

Die Befestigung der verschleißarmen Elemente erfolgt gemäß den Figuren 2 und 3 dadurch, dass zunächst die Bohrungen in einen Rohkörper des Grundkörpers 12c eingebracht werden, wie dies in Fig. 2 dargestellt ist. Nachträglich werden dann die Anlageflächen 14a der verschleißarmen Elemente 14 aus den bereits mit dem verschleißarmen Element versehenen Rohkörper herausgearbeitet, so dass sich eine Darstellung gemäß Fig. 3 ergibt. Insofem sind die Bohrungen 17 beim Einbringen in den Grundkörper 12c vom Material des Grundkörpers voll umgeben oder voll umschlungen. In diese Bohrungen, die an ihrem Grund - zumindest beim Zusammenfügen von verschleißarmem Element 14 und Grundkörper 12c durch Löten - ein Lotdepot 18 aufweisen, werden nun die verschleißarmen Elemente 14 eingefügt, wobei beim Zusammenfügen keine zusätzlichen Zentriervorrichtungen erforderlich sind, da die Bohrung selbst voll umfänglich die verschleißarmen Elemente hält.

Die Anlagefläche 14a wird durch nachträgliches Abarbeiten von Teilen der Wandung der Bohrung 17 unter zumindest teilweisem Freisetzen der verschleißarmen Elemente 14 hergestellt, wobei bedarfsweise auch Teile der verschleißarmen Elemente 14 wieder nachbearbeitet bzw. abgearbeitet werden. Dennoch ist das verschleißarme Element 14 vorzugsweise zumindest im der Mittelachse m-m zugewandten Bereich von der Bohrung 17 ausreichend gefaßt und gehalten, während es im oberen Bereich nicht zwingend aber vorzugsweise über einen Zentriwinkel von etwas mehr als 180° vom Material des Führungselements umgeben sein kann. Bei diesem Abarbeiten muss darauf geachtet werden, dass unterschiedlich verschleißfeste Materialien gleichzeitig zu bearbeiten sind. Es werden also die verschleißarmen Elemente 14 in die Bohrungen 17 eingesetzt, die vorzugsweise bereits in den Flügeln 12b des Rohkörpers vorhanden sind, die eigentliche Kontur der Flügel 12b wird jedoch erst nachträglich hergestellt.

Vorzugsweise sind die Bohrungen 17 im Wesentlichen radial zur Mittelachse m-m des als Führungsbolzen ausgebildeten Führungselements 12 eingebracht, so dass beim Freisetzen der verschleißarmen Elemente die Anlagefläche 14a durch die Seitenflächen der verschleißarmen Elemente gebildet wird.

Grundsätzlich kann das Zusammenfügen zwischen verschleißarmem Element 14 und Führungselement 12 auf beliebige Art und Weise erfolgen. Die verschleißarmen Elemente 14 können gelötet, geschweißt, eingepresst, geschrumpft, geklebt oder eingehipt sein. Wesentlich ist lediglich, dass das Zusammenfügen vor der eigentlichen Erstellung der Konturen der Flügel 12b erfolgt.

Das Führungselement 12 bildet damit seine Anlagefläche 14a quer zur Längserstreckung der verschleißarmen Elemente 14 aus und erstreckt sich damit entlang der Längsseite des als verschleißarmes Element 14 ausgebildeten Stifts. Dadurch ist es möglich, dass sich die verschleißarmen Elemente 14 im Wesentlichen entlang der stirnseitigen, der Sperrhülse 15 zugewandten Kante der Flügel 12b erstrecken, so dass über einen verhältnismäßig langen Bereich eine verschleißfeste Zone gebildet wird. Das verschleißarme Element 14 ist vorzugsweise ein zylindrischer Stift, der über einen etwas geringeren Durchmesser als die Bohrung 17 verfügt. Mit diesen verschleißarmen Elementen 14 steht eine verschleißarme Fläche der Sperrhülse 15 in Wirkverbindung. Dieser Bereich aus verschleißarmem Material wird durch einen Ring 16 gebildet, der vorzugsweise in eine Aufnahmebohrung 15b der Sperrhülse eingesetzt wird. Diese Aufnahmebohrung weist einen im Verhältnis zum Durchmesser des Rings 16 schmalen Umgriff 15a für den Ring auf, so dass aufwändige Zentriereinrichtungen entfallen, da der Umgriff eine gute Positioniergenauigkeit beim Fügen zwischen Ring 16 und Sperrhülse 15 mit sich bringt.

Die Sperrhülse 15 ist dadurch über ihren gesamten Außendurchmesser und über ihre gesamte Länge mit demselben Material mit dem Plastifizierzylinder 10 in Wirkverbindung steht, so dass es nicht aufgrund verschiedener Materialkombinationen zu einem unterschiedlichen Verschleiß zwischen Sperrhülse 15 und Plastifizierzylinder 10 kommen kann. Um den Verschleiß weiter zu verringern, bilden Ring 16 und Sperrhülse 15 in Richtung auf die Flügel 12b des Führungselements 12 eine geschlossene, sich bis zur Innenwandung des Plastifzierzylinders 10 erstreckende Kante 15c bzw. Fläche aus, so dass der Ring radial nach außen vollflächig von der Sperrhülse 15 überdeckt ist. Damit wird vermieden, dass es im Übergangsbereich zwischen Ring 16 bzw. Sperrhülse 15 und dem Plastifizierzylinder zu einer Ablagerung von plastifiziertem Material kommt, dass dort verkokt und die Reibung unter Zunahme des Verschleiß auch des Plastifizierzylinders erhöht.

Insbesondere beim Fügen durch Löten wird der Lötprozess und der Härtungsprozess der Sperrhülse mit ihren beiden Materialien in einem Arbeitsgang durchgeführt. Gleichwohl kann der Ring auch eingeschrumpft, geschweißt oder geklebt werden.

### Bezugszeichenliste

- 10: Plastifizierzylinder
- 11: Schnecke
- 11a: Ausnehmung
- 12: Führungselement
- 12a: Anschluss
- 12b: Flügel
- 12c: Grundkörper
- 13: Sitzring
- 14: Verschleißarmes Element
- 14a: Anlagefläche
- 15: Sperrhülse
- 15a: Umgriff
- 15b: Aufnahmebohrung
- 15c: Kante
- 16: Ring
- 17: Bohrung
- 18: Lotdepot
- m-m: Mittelachse

## Patentansprüche

1. Verfahren zur Herstellung eines Führungselements (12) einer Rückstromsperre für eine Spritzgießmaschine zur Verarbeitung von Kunststoffen und anderen plastifizierbaren Massen, wobei das Führungselement (12) einen Grundkörper (12c) mit wenigstens zwei Flügeln (12b) aufweist, die einer axial entlang des Grundkörpers (12c) verschiebbaren Sperrhülse (15) als Anschlag dienen, mit den Schritten:
- Einbringen von Bohrungen (17) für verschleißarme Elemente (14) in die Flügel (12b), so dass die verschleißarmen Elemente (14) im Gebrauchszustand des Führungselements mit einer Anlagefläche (14a) der Sperrhülse (15) zugewandt sind,
- Einfügen und Befestigen der verschleißarmen Elemente (14),
**dadurch gekennzeichnet, dass** die Bohrungen (17) und die verschleißarmen Elemente (14) in einen Rohkörper des Grundkörpers (12c) bleibend eingebracht werden und dass nachträglich die Anlagefläche (14a) der verschleißarmen Elemente (14) aus dem bereits mit den verschleißarmen Elementen (14) versehenen Rohkörper herausgearbeitet wird.

2. Verfahren nach Anspruch 1, **dadurch gekennzeichnet, dass** die Bohrungen (17) beim Einbringen in den Grundkörper (12c) von diesem voll umschlungen sind.

3. Verfahren nach Anspruch 1 oder 2, **dadurch gekennzeichnet, dass** vor dem Herausarbeiten der Anlagefläche (14a) die im Grundkörper (12c) eingebrachten, verschleißarmen Elemente (14) vom Material des Grundkörpers (12c) vollumschlungen sind.

4. Verfahren nach einem der Ansprüche 1 bis 3, **dadurch gekennzeichnet, dass** die Bohrungen (17) im Wesentlichen radial zur Mittelachse (m-m) des als Führungsbolzen ausgebildeten Führungselements (12) eingebracht werden.

5. Verfahren nach einem der Ansprüche 1-4, **dadurch gekennzeichnet, dass** die Anlagefläche (14a) durch nachträgliches Abarbeiten von Teilen der Wandung der Bohrung (17) unter zumindest teilweisem Freisetzen der verschleißarmen Elemente (14) und gegebenenfalls unter Entfernen von Teilen der verschleißarmen Elemente (14) hergestellt wird.

6. Verfahren nach einem der Ansprüche 1-5, **dadurch gekennzeichnet, dass** der Rohkörper bereits die Flügel (12b) aufweist und dass die Kontur der Flügel (12c) nachträglich hergestellt wird.

7. Führungselement einer Rückstromsperre für eine Spritzgießmaschine zur Verarbeitung von Kunststoffen und anderen plastifizierbaren Massen mit einem Grundkörper (12c) mit wenigstens zwei Flügeln (12b), die einer axial entlang des Grundkörpers (12c) verschiebbaren Sperrhülse (15) mit einer Anlagefläche (14a) als Anschlag dienen, wobei die Anlagefläche (14a) durch in Bohrungen (17) des Grundkörpers (12c) eingebrachte verschleißarme Elemente (14) gebildet ist,
**dadurch gekennzeichnet, dass** die verschleißarmen Elemente (14) im Wesentlichen radial zur Mittelachse (m-m) des Grundkörpers (12c) angeordnet sind und in axialer Richtung des Grundkörpers zur Bildung der Anlagefläche (14a) vom Grundkörper (12c) zumindest teilweise freigesetzt sind, wobei das verschleißarme Element am verbleibenden Umfang der Bohrung gehalten ist.

8. Führungselement nach Anspruch 7, **dadurch gekennzeichnet, dass** die Anlagefläche (14a) quer zur Längserstreckung der verschleißarmen Elemente (14) gebildet ist.

9. Führungselement nach Anspruch 7 oder 8, **dadurch gekennzeichnet, dass** sich die verschleißarmen Elemente (14) im Wesentlichen entlang der stimseitigen, der Sperrhülse (15) zugewandten Kante der Flügel (12b) erstrecken.

10. Führungselement nach einem der Ansprüche 7-9, **dadurch gekennzeichnet, dass** das verschleißarme Element (14) ein in die Bohrung eingebrachter, im Ausgangszustand zylindrischer Stift ist.

11. Führungselement nach einem der Ansprüche 7-10, **dadurch gekennzeichnet, dass** die Bohrung (17) unter dem verschleißarmen Element ein Lotdepot (18) aufweist.

## Claims

1. Method for producing a guide element (12) of a back-flow barrier for an injection moulding machine for the processing of plastics materials and other plasticisable substances, the guide element (12) having a basic body (12c) with at least two vanes (12b) serving as stop element for a barrier sleeve (15) being axially displaceable along the basic body (12c), comprising the steps:
- inserting bores (17) for elements (14) of low wear and tear into the vanes (12b) in such a manner, that in use of the guide element the elements (14) of low wear and tear are facing the barrier sleeve (15) with an abutment face (14a),
- inserting and fixing of the elements (14) of low wear and tear,
**characterised in that** the bores (17) and the elements (14) of low wear and tear are remainingly inserted into a raw body of the basic body (12c) and that subsequently the abutment face (14a) of the elements (14) of low wear and tear are worked out of the raw body already provided with the elements (14) of low wear and tear.

2. Method according to claim 1, **characterised in that** the bores (17) are completely enclosed by the basic body when inserted.

3. Method according to claim 1 or 2, **characterised in that** the elements (14) of low wear and tear which are provided in the basic body (12c) are completely surrounded by the material of the basic body prior to the working of the abutment face (14a).

4. Method according to one of the claims 1 to 3, **characterised in that** the bores (17) are inserted essentially radially to the central axis (m-m) of the guide element (12) being a guide bolt.

5. Method according to one of the claims 1-4, **characterised in that** the abutment face (14a) is produced in subsequently working down parts of the wall of the bores (17), thereby at least partly setting free the elements (14) of low wear and tear and, if required, removing parts of the elements (14) of low wear and tear.

6. Method according to one of the claims 1-5, **characterised in that** the raw body comprises already the vanes (12c) and that the contour of the vanes (12c) is subsequently produced.

7. Guide element of a back-flow barrier for an injection moulding machine for the processing of plastics materials and other plasticisable substances having a basic body (12c) comprising at least two vanes (12b) serving as stop element for a barrier sleeve (15) being axially displaceable along the basic body (12c) with an abutment face (14a), the abutment face (14a) being formed by elements (14) of low wear and tear which are inserted in bores (17) of the basic body (12c),
**characterised in that characterised in that** the elements (14) of low wear and tear are essentially arranged radially to a central axis (m-m) of the basic body (12c) and are at least partially set free in axial direction of the basic body to form the abutment face (14a) of the basic body (12c), wherein the element (14) of low wear and tear is kept on the remaining periphery of the bore.

8. Guide element according to claim 7, **characterised in that** the abutment face (14a) is formed transversally to the longitudinal extension of the elements (14) of low wear and tear.

9. Guide element according to claim 7 or 8, **characterised in that** the elements (14) of low wear and tear extend essentially along the vanes front edge facing the barrier sleeve (15).

10. Guide element according to one of the claims 7-9, **characterised in that** the element (14) of low wear and tear is a pin inserted in the bore and cylindrical in its initial state.

11. Guide element according to one of the claims 7-10, **characterised in that** the bore (17) comprises a solder depot (18) below the element (14) of low wear and tear.

## Revendications

1. Procédé de fabrication d'un élément de guidage (12) d'un clapet de non-retour d'une machine de moulage par injection pour le traitement de matières plastiques et autres masses plastifiables, l'élément de guidage (12) comportant un corps de base (12c) avec au moins deux ailettes (12b) qui servent de butée à une douille d'arrêt (15) coulissant axialement le long du corps de base (12c), comportant les étapes suivantes :
- réalisation de perçages (17) pour des éléments (14) peu sujets à usure dans les ailettes (12b), de manière qu'à l'état d'utilisation de l'élément de guidage, les éléments (14) peu sujets à usure soient tournés, par une surface de contact (14a), vers la douille d'arrêt (15),
- insertion et fixation des éléments (14) peu sujets à usure,
**caractérisé en ce que** les perçages (17) et les éléments (14) peu sujets à usure sont introduits de manière permanente dans un corps tubulaire du corps de base (12c), et **en ce qu'**ultérieurement la surface de contact (14a) des éléments (14) peu sujets à usure est réalisée dans le corps tubulaire déjà pourvu des éléments (14) peu sujets à usure.

2. Procédé selon la revendication 1, **caractérisé en ce que** les perçages (17) sont entièrement entourés par le corps de base (12c), lorsqu'on les réalise dans celui-ci.

3. Procédé selon ia revendication 1 ou 2, **caractérisé en ce qu'**avant de réaliser la surface de contact (14a), les éléments (14) peu sujets à usure, introduits dans le corps de base (12c), sont entièrement entourés par la matière du corps de base (12c).

4. Procédé selon l'une des revendications 1 à 3, **caractérisé en ce que** les perçages (17) sont pratiqués sensiblement radialement par rapport à l'axe médian (m-m) de l'élément de guidage (12) réalisé comme tige de guidage.

5. Procédé selon l'une des revendications 1 à 4, **caractérisé en ce que** la surface de contact (14a) est réalisée par enlèvement ultérieur de parties de la paroi du perçage (17), avec dégagement au moins partiel des éléments (14) peu sujets à usure, et éventuellement avec enlèvement de parties des éléments (14) peu sujets à usure.

6. Procédé selon l'une des revendications 1 à 5, **caractérisé en ce que** le corps tubulaire comporte déjà les ailettes (12b) et **en ce que** le contour des ailettes (12c) est réalisé ultérieurement.

7. Elément de guidage d'un clapet de non-retour pour une machine de moulage par injection pour le traitement de matières plastiques et autres masses plastifiables, comportant un corps de base (12c) avec au moins deux ailettes (12b) qui servent de butée à une douille d'arrêt (15) coulissant axialement le long du corps de base (12c), la surface de contact (4a) étant formée par des éléments (14) peu sujets à usure introduits dans des perçages (17) du corps de base (12c),
**caractérisé en ce que** les éléments (14) peu sujets à usure sont disposés sensiblement radialement par rapport à l'axe médian (m-m) du corps de base (12c) et sont au moins dégagés en partie dans la direction axiale du corps de base pour former la surface de contact (14a) du corps de base (12c), l'élément peu sujet à usure étant maintenu sur le pourtour restant du perçage.

8. Elément de guidage selon la revendication 7, **caractérisé en ce que** la surface de contact (14a) est formée transversalement à l'étendue longitudinale des éléments (14) peu sujets à usure.

9. Elément de guidage selon la revendication 7 ou 8, **caractérisé en ce que** les éléments (14) peu sujets à usure s'étendent sensiblement le long du bord frontal, tourné vers la douille d'arrêt (15), des ailettes (12b).

10. Elément de guidage selon l'une des revendications 7 à 9, **caractérisé en ce que** l'élément (14) peu sujets à usure est une tige cylindrique à l'état initial, introduite dans le perçage.

11. Elément de guidage selon l'une des revendications 7 à 10, **caractérisé en ce que** le perçage (17) présente un dépôt de brasage (18) sous l'élément peu sujet à usure.
